Europäisches Patentamt

European Patent Office

Office européen des brevets

(19)

(11) Publication number: **0 127 391**
**B1**

(12) EUROPEAN PATENT SPECIFICATION

(45) Date of publication of patent specification: **30.09.87**

(21) Application number: **84303343.2**

(22) Date of filing: **17.05.84**

(51) Int. Cl.⁴: **C 03 B 9/40,** C 03 B 9/16,
C 03 B 9/19, C 03 B 9/195

(54) Stop means for turntable of glassware container manufacturing machine.

(30) Priority: **21.05.83 GB 8314145**

(43) Date of publication of application:
**05.12.84 Bulletin 84/49**

(45) Publication of the grant of the patent:
**30.09.87 Bulletin 87/40**

(84) Designated Contracting States:
**DE FR IT**

(56) References cited:
**US-A-3 230 061**

(73) Proprietor: **EMHART INDUSTRIES, INC.**
**426 Colt Highway**
**Farmington Connecticut 06032 (US)**

(72) Inventor: **Nebelung, Hermann Heinrich**
**Baslerstrasse 29**
**CH-8048 Zurich (CH)**

(74) Representative: **Atkinson, Eric et al**
**Emhart Patents Department P.O. Box 88 Ross**
**Walk**
**Belgrave Leicester LE4 5BX (GB)**

Courier Press, Leamington Spa, England.

## Description

This invention is concerned with stop means for turntable of glassware container manufacturing machines of the so-called individual section type in which a number of container manufacturing machines or sections are supplied with glass from a common source and feed their output to a common conveyor.

A glassware container manufacturing machine of the individual section type comprises parison forming means operable to form parisons from gobs of molten glass, parison blowing means operable to blow parisons received from the parison forming means into containers, and parison transferring means operable to transfer parisons from the parison forming means to the parison blowing means. Conventionally, a glassware container manufacturing machine of the individual section type comprises one blow mould for every parison or blank mould, although the parison forming means may comprise two or more moulds from which parison are fed to a like number of blow moulds. However, glassware container manufacturing machines of the individual section type have been proposed in which two blow moulds are associated with each parison mould and the output of the parison mould is fed to each blow mould alternately. In one such machine see (e.g. EP—A1—0027830 and EP—A1—0030655), the parison blowing means comprises a turntable on which alternative moulds of the parison blowing means are mounted, and oscillating means operable to oscillate the turntable about a vertical axis to bring the moulds in turn into a parison receiving position and subsequently into a container releasing position in which containers are released for removal from the machine. In such a machine, it is necessary to bring the turntable to rest in a precise position (within for example ±30 seconds of arc) and to do this positive stops are used which engage associated stop surfaces on the turntable when the turntable is in the required position. In such machines, the turntable is brought to rest by braking means which ensure that the turntable engages the stop only with a light pressure so that the stop is not damaged. However, should the braking means fail to operate correctly there is a possibility that the turntable will hit the stop with excessive force causing damage which may be extensive to the machine.

It is an object of the present invention to provide stop means for the turntable of an individual section glassware container manufacturing machine which reduces the possibility of damage to the machine in the case of over-run of the turntable beyond its parison receiving position.

The invention provides a glassware container manufacturing machine of the individual section type comprising parison forming means operable to form parisons from gobs of molten glass, parison blowing means operable to blow parisons received from the parison forming means into containers, and parison transferring means operable to transfer parisons from the parison forming means to the parison blowing means, the parison blowing means comprising a turntable on which alternative moulds of the parison blowing means are mounted, oscillating means operable to oscillate the turntable about a vertical axis to bring the moulds in turn into a parison receiving position and subsequently into a container releasing position in which containers are released for removal from the machine, braking means operable to slow the turntable as the moulds approach the parison receiving position, and stop means operable to cause the turntable to stop with a mould in the parison receiving position, the stop means comprising a vertically extending shaft fixed on a fixed frame of the machine, a carrier pivotally mounted on the shaft, a plurality of stops mounted on the carrier each associated with one of the moulds and arranged to project into the path of an associated stop surface of the turntable, and holding means operable to prevent the carrier from pivoting on said shaft when the braking means operates correctly, said holding means being arranged to yield and allow the carrier to pivot on the shaft upon the force between one of the stops and its associated stop surface exceeding a predetermined maximum when the braking means fails to operate correctly.

In a glassware container manufacturing machine as described in the last preceding paragraph, should the braking means for the turntable fail and the turntable over-run its parison position, the holding means of the stop means will yield so that the stop means is not damaged and emergency braking means can operate to bring the turntable to rest.

In order to allow independent adjustment of the parison receiving positions of the turntable, each stop may be movable on the carrier to independently adjust the parison receiving position of the turntable. Each stop may be pivotal on the carrier by adjustment of two setting screws acting on opposed surfaces of the stop to carry out this adjustment.

In order to enable the stop means to be readily reset in the event of yielding of the holding means, the holding means may comprise a pin arranged to break when said force exceeds the predetermined maximum, the pin passing through aligned holes in the carrier and the frame so that it is readily replaceable.

In order to further reduce the risk of damage to the machine by ensuring that the oscillating means of the machine is disabled in the event of yielding of the holding means, the machine may comprise a sensor to detect pivoting of the carrier about said shaft, the sensor being effective to disable the oscillating means.

In order to limit the permissible over-run of the turntable to thereby further reduce the possibility of damage to the machine, the machine may comprise limit stops operable to limit pivoting of the carrier about said shaft to prevent the stop from being removed from the path of its associated stop surface.

There now follows a detailed description, to be read with reference to the accompanying drawings, of a glassware container manufacturing machine which is illustrative of the invention. It is to be understood that the illustrative machine has been selected for description by way of example and not of limitation of the invention.

In the drawings;

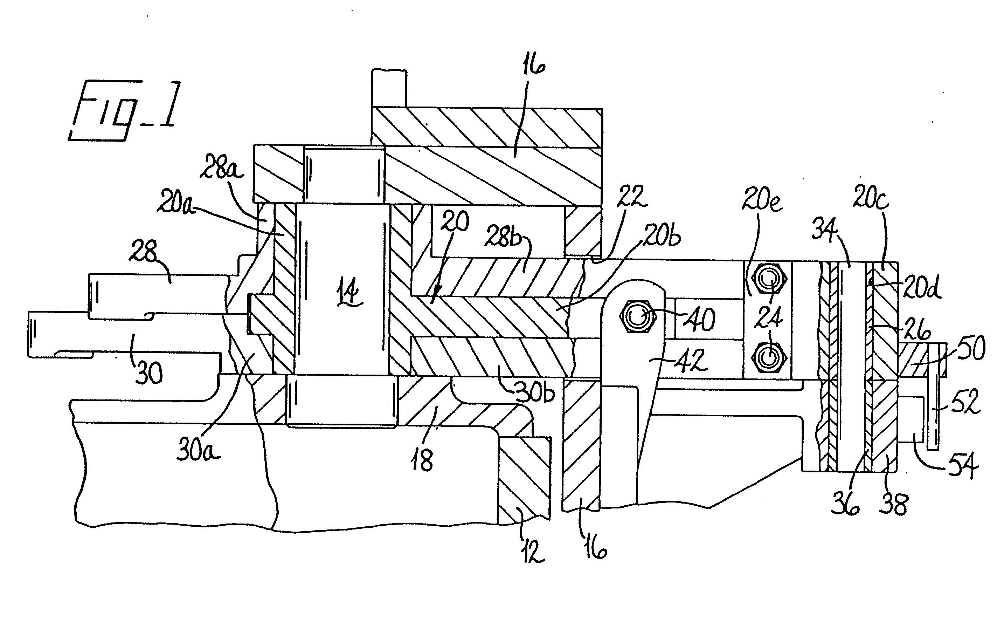

Figure 1 is a side elevational view, partly in section, of stop means of the illustrative machine;

Figure 2 is a plan view with parts broken away of the stop means shown in Figure 1; and

Figure 3 is a view similar to Figure 2 showing the stop means in a different position thereof.

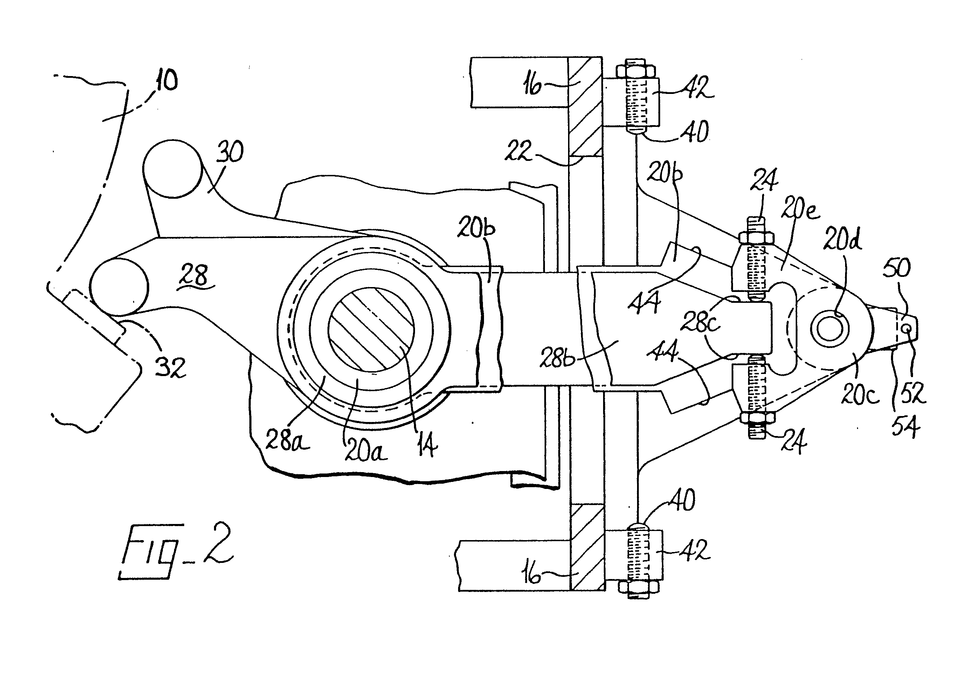

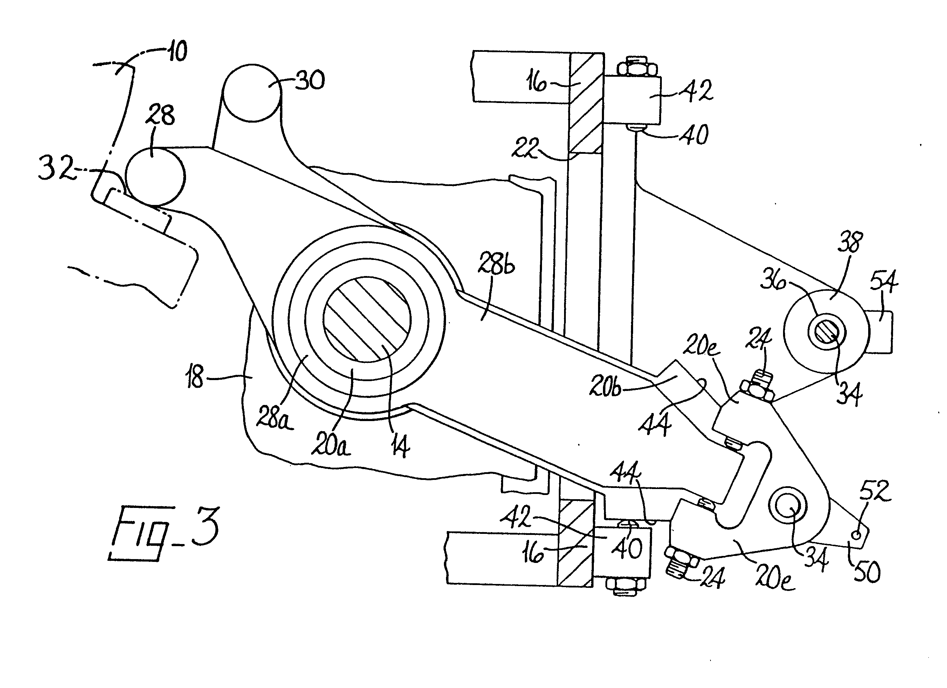

The illustrative machine is a glassware container manufacturing machine of the individual section type comprising parison forming means (not shown) operable to form parisons from gobs of molten glass. The parison forming means is of conventional construction and comprises two moulds mounted side by side so that two parisons can be formed simultaneously from two gobs delivered simultaneously, one to each mould. The machine also comprises parison transferring means (sometimes called inverting means) of conventional construction which is operable to grip parisons in the moulds of the parison forming means and to transfer the parisons from the parison forming means to parison blowing means of the machine mounted on a turntable thereof. The parison blowing means comprises two sets of two moulds mounted on a turntable, each set being of conventional construction. The parison blowing means is operable to blow parisons received from the parison forming means into containers and to release the containers for removal from the machine. The two sets of moulds of the parison blowing means are separated from one another by 180° of the circumference of the turntable which turntable is rotatable about a vertical axis. The turntable is indicated in broken line in Figures 2 and 3 and has the reference numeral 10. The turntable 10 of the parison blowing means thus has alternative moulds of the parison blowing means mounted thereon and oscillating means is provided which is operable to oscillate the turntable about the vertical axis to bring the sets of moulds in turn into a parison receiving position and subsequently into a container releasing position in which the containers are released for removal from the machine. When the turntable 10 is stationary, one set of moulds is at the parison receiving position and the other at the container releasing position. Oscillation of the turntable through 180° brings the other set of moulds to the parison receiving position and the first set of moulds to the container releasing position. The parison blowing means is arranged to blow the parisons into containers as the turntable makes its oscillation. The oscillating means of the turntable 10 comprises a rotary piston motor (not shown) which is arranged to drive gears located in a gear box 12 which in turn drive the turntable through a gear attached thereto. The gearing is arranged so that 360° of rotation of the motor causes 180° of rotation of the turntable 10. The motor is controlled so that it makes a 360° motion in one direction followed by 360° motion in the opposite direction with a pause between such motions during which parisons are transferred to the parison blowing means. The control for the motor incorporates braking means operable to slow the turntable 10 as it approaches the extremes of its oscillation so that it arrives in the parison receiving position thereof with low angular velocity.

The illustrative machine also comprises stop means operable to cause the turntable 10 to stop with a mould in the parison receiving position. The stop means comprises a vertically extending shaft 14 fixed on a fixed frame 16 of the machine, one end of the shaft 14 being journalled directly into the frame 16 and the lower end of the shaft 14 being journalled in a cover 18 of the gear box 12 which is in turn fixedly mounted on the frame 16. The stop means also comprises a carrier 20 pivotally mounted on the shaft 14. The carrier 20 comprises a hollow cylindrical portion 20a surrounding the shaft 14 and a horizontally projecting portion 20b which projects from the portion 20a through an opening 22 in the machine frame 16. Outside the opening 22, the carrier 20 has an annular portion 20c which defines a cylindrical hole 20d extending vertically. Projecting from the portion 20c towards the shaft 14 are two ear portions 20e which extend higher and lower than the portion 20b with the portion 20b passing between the ear portions 20e to join the annular portion 20c. Each of the ear portions 20e carries two limit screws 24 one above and one below the portion 20b. The screws 24 are arranged in an upper pair which are opposed to one another above the portion 20b and a lower pair also opposed to one another below the portion 20b. The hole 20d in the portion 20c contains a shear bush 26.

The stop means also comprises a plurality, viz. two, of stops 28 and 30 each mounted on the carrier 20 and each associated with one set of the moulds on the turntable 10. An upper one of the stops 28 is arranged to project into the path of an associated stop surface 32 of the turntable 10. The upper stop 28 is pivotally mounted on the portion 20a of the carrier 20 and has an annular portion 28a which surrounds the portion 20a above the portion 20b. The stop 28 also comprises a horizontally projecting portion 28b which extends through the opening 22 and terminates in an end portion between the upper pair of setting screws 24. The portion 28b has opposed surfaces 28c arranged to be engaged by the upper pair of setting screws 24. Thus, the upper stop 28 is movable on the carrier by movement of the setting screws 24 to adjust the parison receiving position of the turntable 10. In order to make such an adjustment, one of the upper pair of setting screws 24 is loosened while the other is tightened so that both setting screws are in engagement with their opposed surfaces 28c and the stop 28 is held in its adjusted position on the carrier 20.

The other stop 30 is mounted on the carrier 20 in similar manner to the upper stop 28, the stop 30 having a portion 30a which surrounds a lower portion of the portion 20a of the carrier 20 which is below the portion 20b thereof and a horizontally projecting portion 30b which passes through the opening 22 in the frame 16 and terminates in an end portion (not visible in the drawings) which is between the lower pair of setting screws 24 so that the stop 30 can be adjusted in position on the carrier in similar manner to the stop 28. The stop 30 projects into the path of a further stop surface of the turntable (not shown) which is similar to the surface 32 but spaced therefrom by 180° less the separation of the projecting portions of the stops 28 and 30. The stop 30 is arranged to define the other parison receiving position of the turntable 10 to that defined by the stop 28.

The stop means of the illustrative machine also comprises holding means operable to prevent the carrier 20 from pivoting on the shaft 14, said holding means being arranged to yield and allow the carrier 20 to pivot on the shaft 14 upon the force between one of the stops 28 and 30 and its associated stop surface 32 exceeding a predetermined maximum. The holding means comprises a pin 34 which extends through the shear bush 26 and a shear bush 36 located in a vertically extending hole in a bracket 38 of the frame 16. Thus, the pin 34 extends through aligned holes in the carrier 20 and the frame 16. The pin 34 is arranged to break when the force between one of the stops 28 and 30 and its associated stop surface 32 exceeds the predetermined maximum which will occur should the braking means of the machine fail to slow the turntable down as it is intended to. Thus, if a malfunction occurs in the braking means, the stop surface 32 will strike the stop 28 or 30 with sufficient force to break the pin 34 and the carrier 20 with the stops 28 and 30 will pivot on the shaft 14, the pivoting movement of the stop 28 or 30 being transmitted to the carrier 20 via the setting screws 24. Figure 2 shows the stop means in its normal operative position and Figure 3 shows the carrier 20 and associated parts in a pivoted position reached after breaking of the pin 34 into two halves. In order to limit the pivoting of the carrier 20 after the pin 34 has broken, the illustrative stop means also comprises two opposed adjustable limit stops 40 each mounted on a projection 42 of the frame 16. The limit stops 40 limit the pivoting of the carrier 20 about the shaft 14 in order to prevent the stop 28 or 30 from being removed from the path of its associated stop surface 32. This enables the stop 28 or 30 to act as a limit for the movement of the turntable after emergency braking means has brought it almost to rest during the over-run from its parison receiving position. The stops 40 are engaged by surfaces 33 of the carrier portion 20b as shown in Figure 3. The illustrative machine also comprises a sensor to detect pivoting of the carrier 20 about said shaft 14 which is also effective to disable the oscillating means to thereby ensure that the oscillating means does not continue to drive the turntable 10 beyond its parison receiving position. The sensor comprises a pin 52 which projects downwardly from a bracket 50 which projects from the portion 20c of the carrier 20 in a direction away from the shaft 14. The sensor also comprises an inductance sensor 54 mounted on the bracket 38 adjacent the pin 52. The arrangement is such that, when the pin 34 breaks and the carrier 20 pivots on the shaft 14, the sensor 54 senses the movement of the pin 52 and disables the oscillating means.

The facility for the stop means of the illustrative machine to pivot after the shearing of the pin 34 until the carrier 20 engages the appropriate limit stop 40 enables time for the emergency braking means of the machine to bring the turntable to rest after it is over-run its desired parison receiving position. The limit stop 40 provides a stop to prevent damage to the rotary piston motor which may occur by it over-running its intended end position. Furthermore, the stop means can readily be reset by aligning the holes through the shear bushes 26 and 36 and inserting a replacement pin for the broken pin 34. As the setting screws 24 are located outside the frame 16 of the illustrative machine since the carrier 20 projects through the opening 22 in the frame 16, the setting screws 24 can readily be adjusted and the pin 34 can readily be replaced if necessary. Hence, both the stops 28 and 30 can readily be adjusted and damage to the stop means due to over-run of the turntable is minimised.

**Claims**

1. A glassware container manufacturing machine of the individual section type comprising parison forming means operable to form parisons from gobs of molten glass, parison blowing means operable to blow parisons received from the parison forming means into containers, and parison transferring means operable to transfer parisons from the parison forming means to the parison blowing means, the parison blowing means comprising a turntable (10) on which alternative moulds of the parison blowing means are mounted, oscillating means operable to oscillate the turntable about a vertical axis to bring the moulds in turn into a parison receiving position and subsequently into a container releasing position in which the containers are released for removal from the machine, braking means operable to slow the turntable as the moulds approach the parison receiving position, and stop means (14, 20, 28, 30) operable to cause the turntable (10) to stop with a mould in the parison receiving position, the stop means comprising a vertically extending shaft (14) fixed on a fixed frame (16) of the machine, a carrier (20) pivotally mounted on the shaft (14), a plurality of stops (28, 30) mounted on the carrier (20) each associated with one of the moulds and arranged to project into the path of an associated stop surface (32) of the turntable, and holding means (34) operable to prevent the carrier (20) from pivoting on said shaft (14) when the braking means operates correctly, said holding means (34) being arranged to yield and allow the carrier (20) to pivot on the shaft (14) upon the force between one of the stops (28, 30) and its associated stop surface (32) exceeding a predetermined maximum when the braking means fails to operate correctly.

2. A glassware container manufacturing machine according to claim 1, characterised in that each stop (28, 30) is movable on the carrier (20) to independently adjust the parison receiving positions of the turntable (10).

3. A glassware container manufacturing machine according to claim 2, characterised in that each stop (28, 30) is pivotal on the carrier (20) by adjustment of two setting screws (24) acting on opposed surfaces (28c) of the stop.

4. A glassware container manufacturing machine according to any one of the preceding claims, characterised in that the holding means comprises a pin (34) arranged to break when said force exceeds the predetermined maximum, the pin (34) passing through aligned holes in the carrier (20) and the frame (16).

5. A glassware container manufacturing machine according to any one of the preceding claims, characterised in that the machine comprises a sensor (52, 54) to detect pivoting of the carrier (20) about said shaft (14), the sensor being effective to disable the oscillating means.

6. A glassware container manufacturing machine according to any one of the preceding claims, characterised in that the machine comprises limit stops (40) operable to limit pivoting of the carrier (20) about said shaft (14) to prevent the stop (28, 30) from being removed from the path of its associated stop surface (32).

**Patentansprüche**

1. Maschine zum Herstellen von Glasbehältern mit einer Külbchen ausbildenden Einrichtung, welche im Betrieb Külbchen aus geschmolzenem Glas bildet, mit einer Külbchenblaseinrichtung, welche Külbchen aus der die Külbchen bildenden Einrichtung in Behälter beläst und mit einer Einrichtung zum Übertragen von Külbchen aus der die Külbchen bildenden Einrichtung zu der die Külbchen verblasenden Einrichtung, wobei die die Külbchen verblasende Einrichtung einen Drehtisch (10) umfaßt, auf welchem abwechselnde Formen der die Külbchen verblasenden Einrichtung angeordnet sind, mit einer Oszillatoreinrichtung, welche den Drehtisch um eine vertikale Achse schwingen läßt, um die Formen in eine Külbchenaufnahmeposition und danach in eine Behälterfreigabeposition zu bringen, in welcher die Behälter zwecks Entfernens aus der Maschine freigelassen werden, mit einer Bremseinrichtung, um den Drehtisch abzubremsen, wenn sich die Formen der Külbchenaufnahmeposition nähern und mit einer Halteeinrichtung (14, 20, 28, 30), welche betätigbar ist, um den Drehtisch (10) mit einer Form in der Külbchenaufnahmeposition anzuhalten, wobei die Halteeinrichtung eine sich vertikal erstreckende Welle (14), die an einem fixierten Rahmen (16) der Maschine befestigt ist, einen an der Welle (14) schwenkbar angeordneten Träger (20), eine Vielzahl von Anschlägen (28, 30), die an dem Träger (20) angeordnet sind und je einer der Formen zugeordnet sind und so angeordnet sind, daß sie sich in den Weg einer zugeordneten Anschlagfläche (32) des Drehtisches erstrecken, und eine Halteeinrichtung (34) umfaßt, welche den Träger (20) daran hindert, auf der Welle (14) zu schwenken, wenn die Bremseinrichtung korrekt arbeitet, wobei die Halteeinrichtung (34) so angeordnet ist, daß sie nachgibt und ein Schwenken des Trägers (20) auf der Welle (14) gestattet, wenn die Kraft zwischen einem der Anschläge (28, 30) und ihrer zugeordneten Anschlagfläche (32) ein vorbestimmtes Maximum überschreitet, wenn die Bremseinrichtung nicht korrekt arbeitet.

2. Maschine nach Anspruch 1, dadurch gekennzeichnet, daß jeder Anschlag (28, 30) an dem Träger (20) bewegbar ist, um unabhängig die Külbchenaufnahmepositionen des Drehtisches (10) einzustellen.

3. Maschine nach Anspruch 2, dadurch gekennzeichnet, daß jeder Anschlag (28, 30) an dem Träger (20) durch Einstellen von zwei Einstellschrauben (24) schwenkbar ist, welche auf gegenüberliegende Flächen (28c) des Anschlages einwirken.

4. Maschine nach einem der vorhergehenden Ansprüche, dadurch gekennzeichnet, daß die Halteeinrichtung einen Stift (34) umfaßt, welcher bricht, wenn die erwähnte Kraft das vorbestimmte Maximum überschreitet, und daß sich der Stift (34) durch ausgerichtete Löcher in dem Träger (20) und dem Rahmen (16) erstreckt.

5. Maschine nach einem der vorhergehenden Ansprüche, dadurch gekennzeichnet, daß ein Fühler (52, 54) vorgesehen ist, welcher ein Schwenken des Trägers (20) um die Welle (14) erfaßt, und daß der Fühler wirksam ist, um die Oszillatoreinrichtung unwirksam zu machen.

6. Maschine nach einem der vorhergehenden Ansprüche, dadurch gekennzeichnet, daß Begrenzungsanschläge (40) vorgesehen sind, welche ein Schwenken des Trägers (20) um die Welle (14) begrenzen, um zu verhindern, daß der Anschlag (28, 30) aus dem Weg der zugeordneten Anschlagfläche (32) entfernt wird.

**Revendications**

1. Machine de fabrication de récipients en verre du type à sections individuelles comprenant des moyens de formage des ébauches capables de former des ébauches à partir de paraisons de verre fondu, des moyens de soufflage des ébauches, capables de transformer en récipients, par soufflage, les ébauches reçues en provenance des moyens de formage des ébauches, et des moyens de transfert des ébauches capables de transférer les ébauches des moyens de formage des ébauches aux moyens de soufflage des ébauches, les moyens de soufflage des ébauches comprenant un plateau tournant (10) sur lequel sont montés des moules alternés appartenant aux moyens de soufflage des ébauches, des moyens d'oscillation capables de faire osciller le plateau tournant autour d'un axe vertical pour amener les moules tour à tour dans une position de réception des ébauches et, ensuite, dans une position de libération des récipients, dans laquelle les récipients sont libérés pour être enlevés de la machine, des moyens de freinage capables de ralentir le plateau tournant lorsque les moules s'approchent de la position de réception des ébauches, et des moyens d'arrêt (14, 20, 28, 30) capables d'arrêter le plateau tournant (10) avec un moule situé dans la position de réception des ébauches, les moyens d'arrêt comprenant un arbre (14) orienté verticalement fixé sur un bâti fixe (16) de la machine, un support (20) monté pivotant sur l'arbre (14), plusieurs butées (29, 30) montées sur le support (20) et dont chacune est associée à l'un des moules et est agencée pour se placer sur le trajet d'une surface de butée correspondante (32) du plateau tournant, et des moyens de retenue (34) capables d'empêcher le support (20) de pivoter sur ledit arbre (14) lorsque les moyens de freinage fonctionnent correctement, lesdits moyens de retenue (34) étant agencés pour céder et pour laisser le support (20) pivoter sur l'arbre (14) lorsque la force exercée entre l'une des butées (28, 30) et la surface de butée (32) qui lui correspond excède un maximum prédéterminé si lès moyens de freinage ne fonctionnent pas correctement.

2. Machine de fabrication de récipients en verre selon la revendication 1, caractérisée en ce que chaque butée (28, 30) peut se déplacer sur le support (20) pour régler indépendamment les positions de réception des ébauches du plateau tournant (10).

3. Machine de fabrication de récipients en verre selon la revendication 2, caractérisée en ce qu'on peut faire pivoter chaque butée (28, 30) sur le support (20) en réglant deux vis de réglage (24) qui agissent sur des faces opposées (28c) de la butée.

4. Machine de fabrication de récipients en verre selon l'une quelconque des revendications précédentes, caractérisée en ce que les moyens de retenue comprennent une goupille (34) agencée pour se briser lorsque ladite force excède la maximum prédéterminé, la goupille (34) passant à travers des trous alignés formés dans le support (20) et dans le bâti (16).

5. Machine de fabrication de récipients en verre selon l'une quelconque des revendications précédentes, caractérisée en ce que la machine comprend un capteur (52, 54) destiné à détecter le pivotement du support (20) autour dudit arbre (14), le capteur ayant pour effet de mettre les moyens d'oscillation hors d'action.

6. Machine de fabrication de récipients en verre selon l'une quelconque des revendications précédentes, caractérisée en ce qu'elle comprend des butées limites (40) capables de limiter le mouvement de pivotement du support (20) autour dudit arbre (14) pour empêcher la butée (28, 30) de sortir du trajet de la surface de butée (32) qui lui correspond.

Fig_1

Fig_2

Fig_3